# NEUE EUROPÄISCHE PATENTSCHRIFT

(11) **EP 0 211 216 B2**
(45) Veröffentlichungstag und Bekanntmachung des Hinweises auf die Entscheidung über den Einspruch: **01.04.1998**
(45) Hinweis auf die Patenterteilung: 03.04.1991
(21) Anmeldenummer: 86108666.8
(22) Anmeldetag: 25.06.1986
(51) Int. Cl.: B23D 37/00, B23D 43/06

(54) **Rundräummaschine**
Machine with rotary broaches
Machine avec des outils de brochage rotatifs

(30) Priorität: 28.06.1985 DE 3523274
(43) Veröffentlichungstag der Anmeldung: 25.02.1987
(73) Patentinhaber: Boehringer Werkzeugmaschinen GmbH, D-73002 Göppingen (DE)
(72) Erfinder: Berbalk, Hermann, Ing.-grad., D-7320 Göppingen (DE)
(74) Vertreter: Vogeser, Werner, Dipl.-Ing.

(56) Entgegenhaltungen:
- US-A- 2 232 324
- US-A- 2 468 745
- US-A- 2 553 966
- US-E- 22 174

## Beschreibung

Die Erfindung betrifft eine Verfahren nach den Oberbegriff der Ansprüche 1 bis 3 zum Bearbeiten von Rotationsflächen bzw. senkrecht zur Rotationsachse stehenden Planflächen sich drehender Werkstücke, insbesondere den Mittellagern, Flansch- und Zapfenpartien bei Kurbelwellen. Zur Vereinfachung der Beschreibung des Anmeldungsgegenstandes wird die Erfindung nachfolgend anhand der Bearbeitung von Kurbelwellen beschrieben.

Wangenflächen, Flansche, Zapfen und Mittellager von Kurbelwellen oder anderen rotationssymmetrischen Werkstücken werden heute durch unterschiedliche spanende Bearbeitungsverfahren hergestellt. Beim Satzfräsverfahren wird das sich langsam drehende Werkstück mit innen bzw. außen schneidenden, meist scheibenförmigen Fräswerkzeug-Sätzen bearbeitet. Nachteilig bei diesem Verfahren in wirtschaftlicher Hinsicht ist, daß die Fräser-Sätze bzw. deren Instandsetzung nach Abnutzung für den nächsten Arbeitseinsatz sehr teuer sind und in technischer Hinsicht, daß aufgrund des diskontinuierlichen Zerspanungsvorganges die Schnittkräfte sehr hoch sind, was leicht zu einer Verformung des Werkstückes und damit einer mangelnden Bearbeitungsgenauigkeit führen kann. Zusätzlich weisen die erzeugten Flächen aufgrund des diskontinuierlichen Schnittes beim Fräsen das für diese Bearbeitungsart typische Bild vieler flacher, quer zur Vorschubrichtung verlaufender Hohlkehlen auf.

Wesentlich bessere Oberflächenqualitäten sind dagegen beim Drehen möglich. Bei der Kurbelwellenherstellung wird dabei fast ausschließlich mit dem Einstechverfahren mit Profilmeißeln gearbeitet, was jedoch den Nachteil hat, daß aufgrund der großen Schnittbreite auf die Kurbelwelle große Schnittkräfte wirken, die nur zum Teil durch zwei einander gegenüberliegende Schneiden ausgeglichen werden können. Infolgedessen erreicht die erzielbare Maßhaltigkeit und Oberflächengüte nur Schruppqualität, insbesondere unter Berücksichtigung des relativ starken Werkzeugverschleißes, da ja nur jeweils eine bzw. bei einander gegenüberliegenden Schneideinheiten zwei Werkzeugschneiden gesetzt werden. Um die Qualität der bearbeiteten Flächen zu verbessern, wurden deshalb Einstech-Drehmaschinen mit Revolversystem, wie etwa aus der DE-C 28 36 598 bekannt, zum Einsatz gebracht. Gegenüber dem sonst üblichen Verfahren des Schruppens beispielsweise einer Hauptlagerstelle, auf der einen Drehmaschine und des Schlichtens oder etwa Freistechens auf Spezialdrehmaschinen entfiel dabei das Transportieren, Umspannen und Neu-Justieren des Werkstückes, da bei Verwendung eines Werkzeugrevolvers nach Beenden des Schruppvorganges mit einem anderen Werkzeug in der selben Werkstückaufspannung eine Schlichtbearbeitung vorgenommen werden konnte. Die auf die Kurbelwellen wirkenden hohen Kräfte verringern sich jedoch beim Schlichten gegenüber dem Schnittarbeitsgang nur relativ wenig, da infolge der geringen Spanstärke dafür wieder die spezifische Schnittkraft ansteigt. Die auf diese Weise erzielbare Oberflächengüte wird jedoch, abgesehen von der Werkzeugqualität, maßgeblich von der Dicke des abgenommenen Spanes beeinflußt. Dieses Verhältnis zwischen der radialen Zustellgeschwindigkeit des Werkzeuges und der tangentialen Relativgeschwindigkeit zwischen Werkzeug und Werkstückoberfläche kann jedoch nicht beliebig erhöht werden, da es sowohl bei der Minimierung der radialen Werkzeugzustellgeschwindigkeit als auch bei der Maximierung der Werkstückdrehzahl, durch die allein beim Drehen die tangentiale Relativgeschwindigkeit zwischen Werkzeug und Werkstück beeinflußbar ist, gibt es eine wirtschaftliche Obergrenze, durch den immer mehr steigenden konstruktiven Aufwand beim Herabsetzen der Werkzeugvorschubgeschwindigkeit und Erhöhen der Werkstückdrehzahl.

Eine weitere Bearbeitungsmöglichkeit stellt das Räumen an einem rotierenden Werkstück dar, wie es beispielsweise durch das DE-U 83 32 432 bekannt ist. Dabei wird das Räumwerkzeug an dem rotierenden Werkstück entlanggezogen, wobei sich das Räumwerkzeug in einer Ebene bewegt, die senkrecht zur Drehachse des Werkstückes liegt. Das Räumwerkzeug ist damit mit entsprechend profilierten Werkzeugschneiden besetzt, deren Abstände von der Werkstückdrenachse im Punkt des jeweils geringsten Abstandes von dieser Drehachse unterschiedlich sind, d.h. die Verbindungslinie der Schneiden des Räumwerkzeuges bilden keine genaue Tangente zur zu bearbeitenden Zylinderfläche. Das Werkstück rotiert schnell genug, um bei einmaligem Durchzug des Räumwerkzeuges während der Zeit, in der eine einzelne Schneide des Räumwerkzeuges im Einsatz ist, mehrmals zu rotieren. Nachteil dieses Verfahrens ist, daß wiederum ein unterbrochener Schnitt stattfindet.

Weiterhin ist die Stärke der Materialabnahme bei einmaligem Durchzug des Räumwerkzeuges durch die Drehzahl des Werkstückes einerseits und die Anzahl der Schneiden auf dem Räumwerkzeug andererseits nach oben begrenzt, so daß, besonders bei fehlender Zustellmöglichkeit, entweder die erzielbare Materialabnahme sehr begrenzt oder die Anzahl der Schneiden auf dem Räumwerkzeug und damit die Länge der Räumnadel sehr groß wird. Dies spielt ganz besonders bei der Kurbelwellenbearbeitung eine Rolle, da bei der Wangenbearbeitung große radiale Bearbeitungslängen notwendig sind. Ein weiterer Nachteil dieses Verfahrens besteht darin, daß die Hauptzeit, also der Zeitanteil, während dessen das Werkzeug tatsächlich im Einsatz ist, gegenüber den anderen Bearbeitungsverfahren sehr niedrig ist, da auf jeden Arbeitshub ein annähernd gleich langer Leerhub zurück in die Ausgangsposition notwendig ist.

Demgegenüber zeigt die den nächstkommenden Stand der Technik beschreibende US-A 2 232 324 eine Drehbank, bei der die einzelnen Werkzeuge auf einem Kreisbogen gegen das drehende Werkstück geschwenkt werden. Eine Radialbewegung der Werkzeugeinheit auf der Verbindungslinie zwischen Werkstückmittelpunkt und Werkzeugschwenkpunkt radial auf das Werkstück zu ist jedoch nicht möglich.

Weiter zeigt die US-PS RE 22174 eine als Räummaschine bezeichnete Werkzeugmaschine, bei der die Umfangsflächen eines rotierenden Werkstückes durch einen ebenfalls rotierenden Scheibenfräser bearbeitet werden, wobei eine Zustellung über radiale Verfahrbarkeit der gesamten Werkzeugeinheit in Bezug auf das Werkstück möglich ist.

Der Erfindung liegt daher die Aufgabe zugrunde, ein Bearbeitungsverfahren zu schaffen, bei dem die Nachteile der beschriebenen Bearbeitungsverfahren vermieden werden und insbesondere die notwendigen Bearbeitungsstufen eines Werkstückes, wie etwa einer Kurbelwelle nach dem sowohl technisch als auch wirtschaftlich vorteilhaftesten Bearbeitungsprinzip vollzogen werden

Die Lösung dieser Aufgabe ist durch die kennzeichnenden Merkmale der Ansprüche 1 bis 3 beschrieben. Die Nachteile der genannten Entgegenhaltungen liegen darin, daß jeweils ein spezieller Bearbeitungsvorgang für einen speziellen Bearbeitungsfall festgelegt wird, jedoch keine Abfolge von Bearbeitungsvorgängen gegeben ist, die auch bei unterschiedlichen Werkstücken jeweils zu einer Komplettbearbeitung führen können.

Die spezifischen Nachteile der drei Bearbeitungsarten Drehen, Fräsen und Räumen bzw. Drehräumen werden dabei durch die spezielle Ausgestaltung des Werkzeugs sowie die unterschiedlichen Zustellarten umgangen. Auf dem Umfang eines scheibenförmigen, drehbaren Werkzeuges ist eine Reihe von Schneiden angebracht, die einander ergänzende Profile aufweisen, oder auch unabhängig voneinander gestaltet sein können. Der radiale Abstand der Werkzeugschneiden vom Mittelpunkt des Werkzeuges ist immer gleich, und dennoch könnte dieses scheibenförmige Werkzeug als eine zu einem Kreis gebogene Räumnadel gesehen werden, da die Spandicke, die beim Räumen durch die unterschiedliche Höhe der einzelnen Schneiden realisiert wird, beim Anmeldungsgegenstand durch eine Veränderung des radialen Abstandes zwischen Werkzeugschneide und Werkstückmittelpunkt geschieht. Zusätzlich bietet das Werkzeug beim Anmeldungsgegenstand zwei verschiedene Zustellmöglichkeiten: einmal, wie beim Drehen mit einem Werkzeugrevolver, eine rein radiale Zustellung des Werkzeuges, das heißt, die Werkzeugschneide wird auf der Verbindungslinie von Werkzeugdrehpunkt und Werkstückdrehpunkt in Richtung auf die Werkstückmitte zu bewegt, und zum anderen eine aus tangentialer und radialer Bewegung zusammengesetzte Zustellung der Werkzeugschneide, die durch ein Schwenken des scheibenförmigen Werkzeuges um seine Drehachse während sich die Schneide im Einsatz befindet, geschieht.

Die Werkzeugschneide wird dabei von dem Punkt, an dem sie an dem Werkstückumfang in Eingriff kommt, bis zur Verbindungslinie aus Werkzeugmittelpunkt und Werkstückmittelpunkt geschwenkt. Bei einem Weiterdrehen des Werkzeuges über diese Mittellinie hinaus kommt die genannte Schneide außer Eingriff, während sich die nächste Schneide dem Werkstück nähert bzw. aufgrund einer inzwischen erfolgten Zustellbewegung des Werkzeugmittelpunktes in Richtung auf den Werkstückmittelpunkt bereits im Eingriff ist. Ein solches Einschwenken des Werkzeuges erlaubt eine wesentlich feinere Spanabnahme als das rein radiale Einstechen und bietet somit den Vorteil einer besseren Oberflächenqualität und Maßhaltigkeit.

Die beschriebene Gestaltung und die verschiedenen Bewegungsmöglichkeiten des Werkzeuges bieten den Vorteil, daß bei der Bearbeitung eines Werkstückes für jeden Teilbearbeitungsvorgang die wirtschaftlichste Zerspanungsart gewählt werden kann: So werden z.B. die Lagerstellen einer Kurbelwelle derart bearbeitet, daß das Vorschruppen, bei dem eine große Durchmesserdifferenz überwunden werden muß, im schnellen radialen Einstechverfahren mit Profilmeißeln geschieht und die danach notwendige Schlichtbearbeitung zur Erzielung einer guten Oberfläche durch einen Einschwenkvorgang mit einer neuen, nicht abgenutzten Schneide ausgeführt wird. Da eine ganze Reihe von Einstech-Schruppschneiden auf dem Werkzeug zur Verfügung stehen und auch die Schlichtschneide nur für eine sehr geringe Spanabnahme benutzt wird, ergibt sich insgesamt eine sehr lange Standzeit des gesamten Werkzeuges, so daß ein hoher Nutzungsgrad der Werkzeugmaschine gewährleistet ist.

Ganz allgemein wirkt sich diese Methode vorteilhaft bei großen abzutragenden Durchmessern aus, bei Kurbelwellen zum Beispiel bei der Wangenbearbeitung, da hier etwa die ganze radiale Länge der Wange im schnellen Einstechverfahren bearbeitet werden kann, wobei einander ergänzende Profilmeißel abwechselnd eingesetzt werden können und anschließend nur noch etwa der Ölbund oder diverse Freistiche im Einschwenkverfahren geschnitten werden. Damit kann, bei Einhalten der geforderten Maßhaltigkeit und Oberflächengüte, eine minimale Bearbeitungszeit erreicht werden.

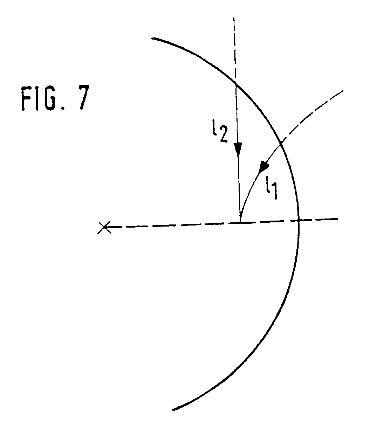

Weiterhin wirkt sich die Ausgestaltung und Steuerbarkeit des Werkzeugs vorteilhaft aus, indem verschiedene Schneidenprofile am Umfang angebracht werden können und durch die radiale Zustellung des Werkzeuges große Durchmesserdifferenzen geschnitten werden können, wobei eine oder mehrere der Schneidenprofile während einer Bearbeitungsoperation mehrmals zum Einsatz gebracht werden können, so daß große Durchmesserdifferenzen mit nur wenigen Schneidenprofilen bearbeitet werden können. Die Kosten für das Werkzeug werden dadurch niedriger und die Spanabfuhr durch die Schneidenteilung beim Herstellen eines bestimmten Werkstückprofiles und der daraus folgenden besseren Spankammerausbildung problemloser. Ein weiterer Vorteil ist die kompakte Bauweise einer solchen Werkzeugmaschine, ermöglicht durch die kompakte Werkzeugform, sowie eine, gegenüber einem rein tangentialen Schneideneingriff wie beim Drehräumen, verbesserte Schneidenstandzeit: Da bei volumenmäßig gleicher beabsichtigter Materialabnahme die Standzeit der Schneide nur noch von der Eingriffszeit und damit, bei gleicher Zustellgeschwindigkeit, von der Zustellstrecke abhängt, ist bei einem bogenförmigen Einschwenken der Schneide in das Werkstück eine längere Standzeit möglich, da zur Überwindung einer bestimmten Durchmesserdifferenz bei dieser Bewegung eine kürzere Zustellstrecke ℓ1 zurückgelegt werden muß als die Zustellstrecke ℓ2 bei rein tangentialer Zustellung wie etwa dem Drehräumen (s. Fig. 7).

Ausführungsbeipiele der Erfindung sind in den Zeichnungen 1 bis 7 dargestellt und werden im folgenden näher beschrieben. Es zeigt:
- Fig. 1: eine Seitenansicht der Werkzeugmaschine in Richtung der Werkstückdrehachse,
- Fig. 2: eine Aufsicht auf die Werkzeugmaschine,
- Fig. 3 und 4: unterschiedliche Stellungen der Schneide am Werkstück,
- Fig. 5 und 6: eine Ausführungsform der Werkzeugmaschine mit einem Werkstückantrieb in der Mitte der zu bearbeitenden Kurbelwelle,
- Fig. 7: eine Darstellung der Zustellstrecken, und

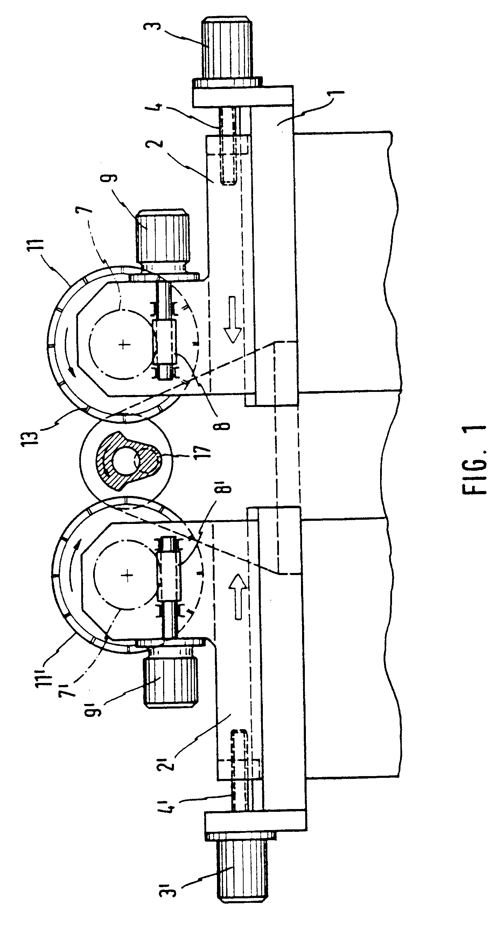

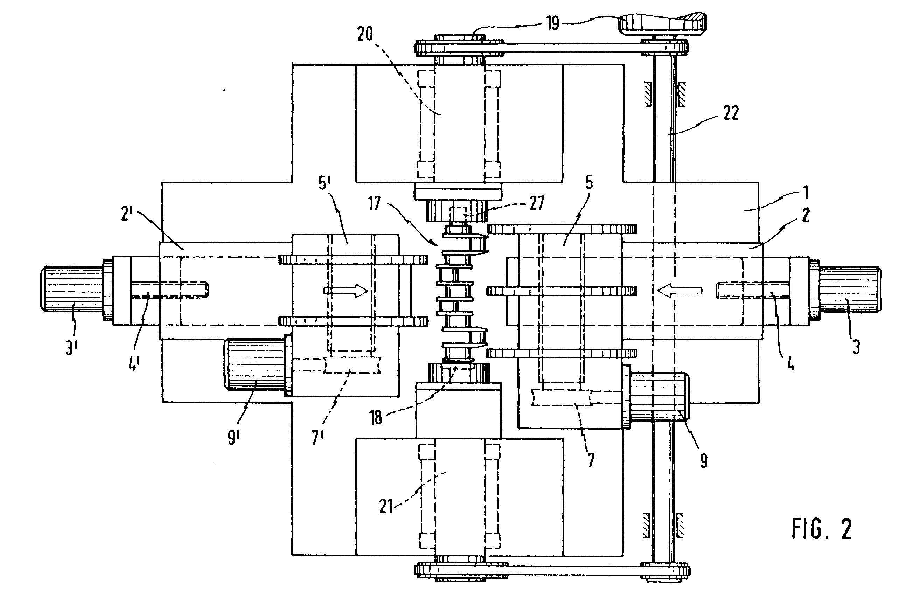

In dem Ausführungsbeispiel der Fig. 1 und 2 ist eine Werkzeugmaschine gemäß der Erfindung dargestellt, bei der auf einem Maschinenbett 1 zwei in der Horizontalen verschiebbare Werkzeugträgereinheiten 2 und 2' angeordnet sind, die in einer Ebene senkrecht zur Werkstückdrehachse mit Hilfe der Motoren 3 und 3' über Spindeln 4 und 4' verschoben werden können. Auf diesen Werkzeugträgereinheiten 2,2' befinden sich die Trägkörper 5, 5', auf denen die scheibenförmigen Werkzeuge 11, 11' mit den Schneiden 13 am Umfang befestigt sind. Der Antrieb der Tragkörper 5, 5' erfolgt durch die CNC-gesteuerten Motore 9 und 9' über die Schnecken 8, 8' und die Schneckenräder 7, 7'. Das Werkstück, die Kurbelwelle 17, wird am Flansch und am Zapfen in den Spannfuttern 18 und 27 gespannt und über ein Antriebssystem 19 in bekannter Weise in Drehung versetzt. Damit ein synchroner Lauf gewährleistet ist, wird die Flanschseite 18 ebenfalls angetrieben. Zu diesem Zweck erhalten die beiden Spindeln 20 und 21 über die Welle 22 einen gemeinsamen Antrieb. Wenn es die Steifigkeit der Kurbelwelle zuläßt, reicht ein einseitiger Antrieb aus.

Die Bearbeitung des Werkstückes kann nun je nach den Erfordernissen und der Werkstückbeschaffenheit nach verschiedenen Varianten vorgenommen werden: Bei ausreichend stabilem steifen Werkstück wird nur mit einer Werkzeugträgereinheit 2 gearbeitet. Bei labileren Werkstücken dagegen wird mit zwei gegenüberliegenden Werkzeugträgereinheiten 2 und 2' gearbeitet, so daß sich die Schnittkräfte in Bezug auf die Kurbelwelle teilweise aufheben. Ist dies nicht möglich, wird die Werkzeugträgereinheit 2' mit Lünetten ausgerüstet, so daß das Werkstück beim Bearbeiten durch die Werkzeugträgereinheit 2 abgestützt werden kann.

Die Schnittart der Zerspanung wird bei den einzelnen Bearbeitungsflächen je nach den Erfordernissen an Maßhaltigkeit und Oberflächengüte der einzelnen Flächen, z.B. Ölbund, Zapfenumfang, Freistiche, Wangenflächen, festgelegt.

Da bei der Wangenbearbeitung,beispielsweise bei geringen Anforderungen an die Oberflächengüte,eine große Durchmesserdifferenz bei kleiner Schnittbreite zu überdrehen ist, wird hier die rein radiale Einstechbewegung bevorzugt, da pro Kurbelwellenumdrehung der Vorschubwert abgetragen wird und damit die Bearbeitungszeit sehr klein bleibt.

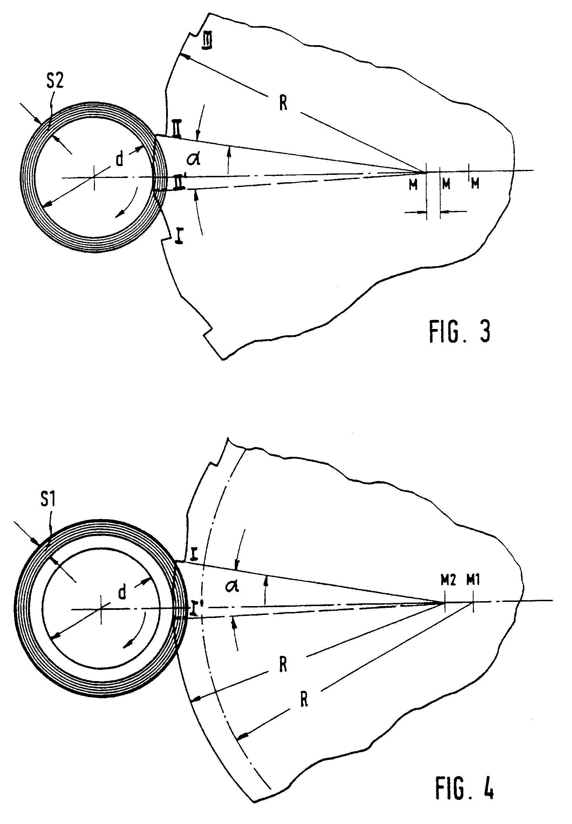

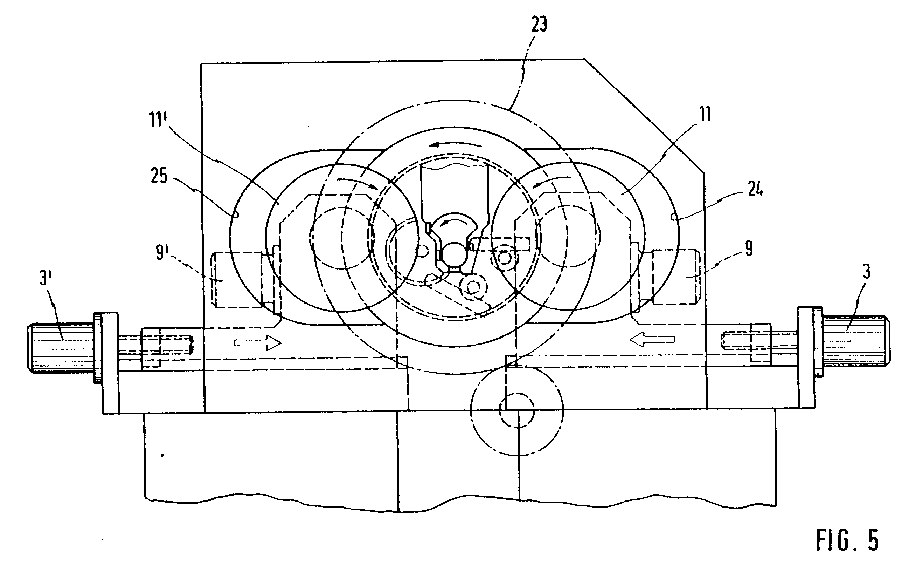

Bei der Ölbund-Zapfen- und Freistichbearbeitung dagegen, bei der gute Oberflächen und hohe Maßhaltigkeit verlangt sind und die notwendige Materialabnahme nur gering ist, wird die Schwenkbewegung des Werkzeuges als Vorschub verwendet. Dabei wird die abzutragende Spandicke S1, s. Fig. 4, während mehrerer Kurbelwellenumdrehungen abgetragen, da das Einschwenken der Schneide vom Berührungspunkt mit dem Werkstück bis zum radial tiefsten Punkt im Werkstück eine längere Zeit in Anspruch nimmt, als eine rein radiale Zustellbewegung um die Strecke S1. Die Materialstärke S1 wird also in mehreren kleinen Spanschichten abgetragen, was geringere Schnittkräfte auf die Kurbelwelle und damit bessere Oberflächen und bessere Bearbeitungsgenauigkeit zur Folge hat. Je nach beabsichtigter Materialabnahme bzw. Rohteilaufmaßen müssen mehrere Schnitte und Zustellungen erfolgen, da die maximal mögliche Materialabnahme bei feststehendem Werkzeugdurchmesser und Abstand der Schneiden auf dem Werkzeugumfang lediglich vom Werkstückdurchmesser abhängt, wenn jeweils nur eine Schneide gleichzeitig im Einsatz sein soll. Der maximale Einschwenkwinkel α, also vom Berühren der Schneide mit dem Werkstück bis zum Erreichen des geringsten Abstandes zwischen Schneide und Werkstückmittelpunkt, beträgt dann maximal den halben Winkelabstand zwischen zwei benachbarten Schneiden auf dem Werkzeug 11, was bei unterschiedlichen Werkstückdurchmessern eine um so größere Materialabnahme bei einer Einschwenkbewegung ermöglicht, je geringer der Werkstückdurchmesser ist. Ist die beabsichtigte Materialabnahme größer als die maximal bei einem Schnitt mögliche Materialabnahme S, so wird in einem ersten Schnitt bei außer Eingriff stehender Schneide I der Werkzeugmittelpunkt von M1 um die bei diesem Schnitt maximal mögliche Materialabnahme S1 nach M2 verstellt und anschließend die Schneide I durch Einschwenken bis auf die Waagerechte. d.h. den tiefsten Punkt der Schneide im Werkstück, in Eingriff gebracht und anschließend weiter verschwenkt, bis die Schneide I außer Eingriff und die Schneide II noch nicht im Eingriff ist. Im folgenden wird nun wieder der Werkzeugmittelpunkt von M2 um die bei diesem Schnitt maximal mögliche, nunmehr etwas größere mögliche Materialabnahme S2 nach M3 verstellt, und anschließend wiederum die Schneide II durch Einschwenken in das Werkstück in Eingriff gebracht (Fig. 3 und 4).

Um die Anzahl der Schneiden aus wirtschaftlichen und konstruktiven Gründen in Grenzen zu halten, kann jedoch für den zweiten Schnitt auch die Schneide I von der Waagerechten aus nach Beendigung des Schnittes durch Zurückschwenken außer Eingriff gebracht werden und beim zweiten Scnnitt wiederum Verwendung finden.

Nach beenderer Flächenbearbeitung können in analoger Weise Freistiche etc. durch Einsatz von speziellen Profilmeißeln eingebracht werden.

Damit können mit ein und demselben Werkzeug durch Verwendung unterschiedlicher Zustellmöglichkeiten unterschiedlich schnelle Materialabnahmen und Oberflächengüten erzielt werden.

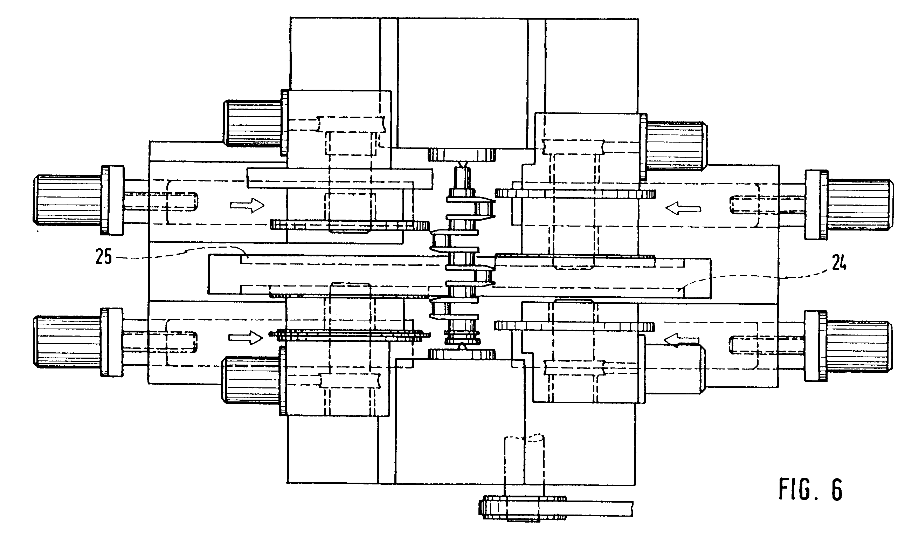

Die in den Fig. 5 und 6 dargestellte Ausführungsform dient der Bearbeitung einer Kurbelwelle an den Enden, also Flansch- und Zapfenpartie, was dadurch ermöglicht wird, daß die Kurbelwelle durch eine auf dem Maschinenbett 1 in etwa der Mitte der axialen Länge der Kurbelwelle angeordnete Antriebseinheit so in Drehung versetzt wird, die derart gestaltet ist, daß in den Aussparungen 24 und 25 die Werkzeuge 11 und 11' Platz finden.

## Patentansprüche

1. Verfahren zur spanenden Bearbeitung von rotationssymmetrischen Werkstückflächen, wobei das Werkstück (17) während der Bearbeitung relativ schnell rotiert und ein scheibenförmiges Werkzeug (11, 11'), welches an seiner Umfangsfläche mehrere Schneiden (13) aufweist, hierzu relativ langsam neben dem Werkstück (17) mit der Drehachse des Werkzeuges (11, 11') parallel zur Drehachse des Werkstückes (17) drehbar ist,
dadurch **gekennzeichnet**, daß
zunächst eine Grobbearbeitung durch radiales Einstechen mit den Schneiden (13) von Profilmeiβeln des Werkzeuges (11, 11') wie beim Drehen erfolgt, mit anschließender Schlichtbearbeitung durch Einschwenken einer Schneide (13) des scheibenförmigen Werkzeuges (11) bis zur Verbindungslinie aus dem Werkstückmittelpunkt und dem Werkzeugmittelpunkt, wobei die Schneide in Eingriff mit der zu bearbeitenden, rotierenden Werkstückfläche steht.

2. Verfahren zur spanenden Bearbeitung von rotationssymmetrischen Werkstückflächen, wobei das Werkstück (17) während der Bearbeitung relativ schnell rotiert und ein scheibenförmiges Werkzeug (11, 11'), welches an seiner Umfangsfläche mehrere Schneiden (13) aufweist, hierzu relativ langsam neben dem Werkstück (17) mit der Drehachse des Werkzeuges (11, 11') parallel zur Drehachse des Werkstückes (17) drehbar ist,
**gekennzeichnet** durch
den mindestens einfachen Ablauf der folgenden Verfahrensschritte:
- Einschwenken einer Schneide (13) des scheibenförmigen Werkzeuges (11), so daß diese Schneide (13) mit der zu bearbeitenden rotierenden Werkstückfläche in Eingriff kommt und Weiterschwenken dieser Schneide (13) über die Verbindungslinie aus Werkstückmittelpunkt und Werkzeugmittelpunkt hinaus, bis diese Schneide (13) außer Eingriff gerät und noch keine andere Schneide des scheibenförmigen Werkzeugs (11) in Eingriff gerät,
- einer Zustellbewegung des Werkzeugmittelpunktes in Richtung auf den Werkstückmittelpunkt, bevor die nächste Schneide des scheibenförmigen Werkzeuges (17) in Eingriff kommt.

3. Verfahren zur spanenden Bearbeitung von rotationssymmetrischen Werkstückflächen, wobei das Werkstück (17) während der Bearbeitung relativ schnell rotiert und ein scheibenförmiges Werkzeug (11, 11'), welches an seiner Umfangsfläche mehrere Schneiden (13) aufweist, hierzu relativ langsam neben dem Werkstück (17) mit der Drehachse des Werkzeuges (11, 11') parallel zur Drehachse des Werkstückes (17) drehbar ist,
**gekennzeichnet** durch
den mindestens einfachen Ablauf der folgenden Verfahrensschritte:
- Einschwenken einer Schneide (13) des scheibenförmigen Werkzeuges (11), so daß diese Schneide (13) mit der zu bearbeitenden rotierenden Werkstückfläche in Eingriff kommt und Weiterschwenken dieser Schneide (13) bis zur Verbindungslinie aus Werkstückmittelpunkt und Werkzeugmittelpunkt,
- Außereingriffbringen dieser Schneide (13) durch Zurückschwenken und
- Verlagerung des Werkzeugmittelpunktes auf den Werkstückmittelpunkt zu über die vorherige Position des Werkzeugmittelpunktes hinaus.

## Claims

1. Process for cutting rotationally symmetrical workpiece surfaces, the workpiece (17) rotating relatively rapidly during the processing, and having a disc-shaped tool (11.11') which is provided on its peripheral surface with a number of blades (13) and which is rotatable relatively slowly next to the workpiece (17), with the rotation axis of the tool (11, 11') parallel to the rotation axis of the workpiece (17), characterized by the fact that an initial rough processing is effected by the radial insertion of the blades (13) of the profile cutters of the tool (11, 11'), as in the rotation, followed by a finishing process by pivoting a blade (13) of the disc-shaped tool (11) in as far as the connecting line between the centre of the workpiece and the centre of the tool, the blade engaging the rotating workpiece surface to be processed.

2. Process for cutting rotationally symmetrical workpiece surfaces, the workpiece (17) rotating relatively rapidly during the processing, and having a disc-shaped tool (11, 11') which is provided on its peripheral surface with a number of blades (13) and which is rotatable relatively slowly next to the workpiece (17), with the rotation axis of the tool (11,11') parallel to the rotation axis of the workpiece (17), characterized by at least the simple succession of the following steps in the process:
- a blade (13) of the disc-shaped tool (11) being pivoted into position so that this blade (13) engages the rotating workpiece surface to be processed, this blade (13) being further pivoted beyond the connecting line between the centre of the workpiece and the centre of the tool, until this blade (13) disengages and no other blade of the disc-shaped tool (11) yet engages,
- a feed movement of the tool centre in the direction of the workpiece centre before the next blade of the disc-shaped tool engages.

3. Process for cutting rotationally symmetrical workpiece surfaces, the workpiece (17) rotating relatively rapidly during the processing, and having a disc-shaped tool (11,11') which is provided on its peripheral surface with a number of blades (13) and which is rotatable relatively slowly next to the workpiece (17), with the rotation axis of the tool (11,11') parallel to the rotation axis of the workpiece (17), characterized by at least the simple succession of the following steps in the process:
- a blade (13) of the disc-shaped tool (11) being pivoted into position so that this blade (13) engages the rotating workpiece surface to be processed, this blade (13) being further pivoted as far as the connecting line between the centre of the workpiece and the centre of the tool
- disengagement of this blade (13) by pivoting it back, and
- displacement of the tool centre towards the workpiece centre, beyond the previous position of the tool centre.

## Revendications

1. Procédé pour l'usinage avec enlèvement de copeaux de surfaces de pièce à symétrie de rotation, la pièce (17) tournant relativement rapidement pendant l'usinage et un outil (11, 11') en forme de disque dont la surface périphérique comporte plusieurs couteaux (13) qui tournent relativement lentement à côté de la pièce (17), l'axe de rotation de l'outil (11, 11') étant parallèle à l'axe de rotation de la pièce (17),
caractérisé en ce qu'on effectue tout d'abord un usinage grossier par usinage en plongée radiale à l'aide des couteaux (13) de ciseaux de l'outil (11, 11'), comme pour le travail au tour, puis on effectue un usinage léger en basculant un couteau (13) de l'outil (11) en forme de disque jusqu'à la ligne de jonction passant par le centre de la pièce et le centre de l'outil, le couteau étant en prise avec la surface de la pièce qui tourne et doit être usinée.

2. Procédé pour l'usinage avec enlèvement de copeaux de surfaces de pièce présentant une symétrie de rotation, la pièce (17) tournant relativement rapidement pendant l'usinage et ayant un outil (11, 11') en forme de disque dont la surface périphérique comporte plusieurs couteaux (13), l'outil tournant relativement lentement à côté de la pièce (17), l'axe de rotation de l'outil (11, 11') étant parallèle à l'axe de rotation de la pièce (17),
caractérisé par au moins un déroulement simple des étapes de procédé suivantes:
- basculement rentrant d'un couteau (13) de l'outil (11) en forme de disque pour que ce couteau (13) arrive en prise avec la surface de la pièce, rotative, à usiner, et poursuite du basculement de ce couteau (13) au-delà de la ligne de jonction passant par le centre de la pièce et le centre de l'outil jusqu'à ce que ce couteau (13) vienne hors de prise et qu'aucun outil (11) en forme de disque ne soit déjà en prise,
- commande de mise en place du centre de l'outil en direction du centre de la pièce avant que le couteau suivant de l'outil (11) en forme de disque ne soit en prise.

3. Procédé d'usinage avec enlèvement de copeaux de surfaces de pièce présentant une symétrie de rotation, la pièce (17) tournant relativement rapidement pendant l'usinage et un outil (11, 11') en forme de disque dont la surface périphérique comporte plusieurs couteaux (13) tournant relativement lentement à côté de la pièce (17), l'axe de rotation de l'outil (11, 11') étant parallèle à l'axe de rotation de la pièce (17),
caractérisé par au moins un déroulement simple des étapes de procédé suivantes:
- basculement rentrant d'un couteau (13) de l'outil (11) en forme de disque pour que ce couteau (13) vienne en prise avec la surface de la pièce rotative, à usiner et on poursuit le basculement de ce couteau (13) jusqu'à la ligne de jonction entre le centre de la pièce et le centre de l'outil,
- dégagement de ce couteau (13) par basculement en arrière et,
- déplacement du centre de l'outil par rapport au centre de la pièce au-delà de la position précédente du centre de la pièce.
